# EUROPÄISCHE PATENTSCHRIFT

(11) **EP 2 657 549 B1**
(45) Veröffentlichungstag und Bekanntmachung des Hinweises auf die Patenterteilung: **13.11.2019**
(21) Anmeldenummer: 13162729.1
(22) Anmeldetag: 08.04.2013
(51) Int. Cl.: F16B 37/04

(54) **Steckmutter**
Push-on nut
Ecrou mâle

(30) Priorität: 27.04.2012 DE 102012207142
(43) Veröffentlichungstag der Anmeldung: 30.10.2013
(73) Patentinhaber: A. RAYMOND et Cie, 38000 Grenoble (FR)
(72) Erfinder: Hauser, Ingo, 79400 Kandern (DE)
(74) Vertreter: König Szynka Tilmann von Renesse Patentanwälte Partnerschaft mbB

(56) Entgegenhaltungen:
- EP-B1- 1 784 578
- CH-A- 392 156
- US-A- 3 145 753

## Beschreibung

Die Erfindung betrifft eine Steckmutter gemäß dem Oberbegriff des Patentanspruches 1.

Eine derartige Steckmutter ist aus EP 1 784 578 B1 bekannt. Diese vorbekannte Steckmutter zum Befestigen eines Anbauteiles an einem Trägerteil verfügt über ein Lagerteil, das eine Deckplatte und eine Randplatte aufweist, die zueinander abgewinkelt ausgerichtet sind. Weiterhin ist die Steckmutter mit einem Verschiebeteil ausgebildet, das in einer Längsrichtung zu dem Lagerteil über eine Führungsanordnung verschiebbar mit diesem verbunden ist. Das Verschiebeteil ist mit einer Federanordnung in Richtung der Deckplatte vorspannbar. Bei dieser vorbekannten einstückigen Steckmutter ist die Federanordnung durch zwei fest sowohl mit dem Lagerteil als auch mit dem Verschiebeteil fest verbundene biegsame Bandstreifen gebildet, die das Verschiebeteil in Richtung der Deckplatte vorspannen.

Eine Steckmutter nach dem Oberbegriff des Patentanspruchs 1 ist aus CH 392 156 A und US 3,145,753 A bekannt.

Der Erfindung liegt die Aufgabe zugrunde, eine Steckmutter der eingangs genannten Art anzugeben, die sich durch eine verhältnismäßig einfache Herstellung und eine gute Stabilität auszeichnet.

Diese Aufgabe wird bei einer Steckmutter der eingangs genannten Art erfindungsgemäß mit den kennzeichnenden Merkmalen des Patentanspruches 1 gelöst.

Dadurch, dass bei der erfindungsgemäßen Steckmutter die Federanordnung wenigstens einen Federarm aufweist, dessen Betätigungsende gegenüber dem Verschiebeteil frei beweglich gelagert ist, lassen sich das Lagerteil und das Verschiebeteil verhältnismäßig einfach werkzeugtechnisch getrennt voneinander herstellen und nachträglich montieren oder in einem Werkzeug beispielsweise mittels einer Filmanbindung gemeinsam herstellen und noch vor dem Auswurf im Werkzeug vorzugsweise verliersicher zusammenfügen. Weiterhin lässt sich der oder jeder Federarm zum Erzielen einer hohen Stabilität verhältnismäßig massiv ausbilden, wobei bei einem entsprechenden Einrichten der Lagerung des Betätigungsendes des Federarmes auch bei einem verhältnismäßig kräftig ausgebildeten Federarm dennoch ein einfaches Anbringen fördernde, relativ geringe Vorspannkräfte vorhanden sind.

Weitere zweckmäßige Ausgestaltungen der Erfindung sind Gegenstand der Unteransprüche.

Weitere zweckmäßige Ausgestaltungen und Vorteile der Erfindung ergeben sich aus der nachfolgenden Beschreibung eines Ausführungsbeispieles mit Bezug auf die Figuren der Zeichnung. Es zeigen:
- Fig. 1: in einer perspektivischen Ansicht ein Ausführungsbeispiel einer erfindungsgemäßen Steckmutter mit Blick auf die einem Verschiebeteil zugewandte Seite einer Deckplatte eines Lagerteiles,
- Fig. 2: in einer perspektivischen Ansicht das Ausführungsbeispiel gemäß Fig. 1 mit Blick auf die dem Verschiebeteil abgewandte Seite der Deckplatte,
- Fig. 3: in einer Schnittansicht das Ausführungsbeispiel gemäß Fig. 1 und Fig. 2 in einer Vormontageanordnung beim Verbinden eines Anbauteiles mit einem relativ dünnen Trägerteil und
- Fig. 4: in einer Schnittansicht das Ausführungsbeispiel gemäß Fig. 1 und Fig. 2 in einer Vormontageanordnung beim Verbinden eines Anbauteiles mit einem relativ dicken Trägerteil.

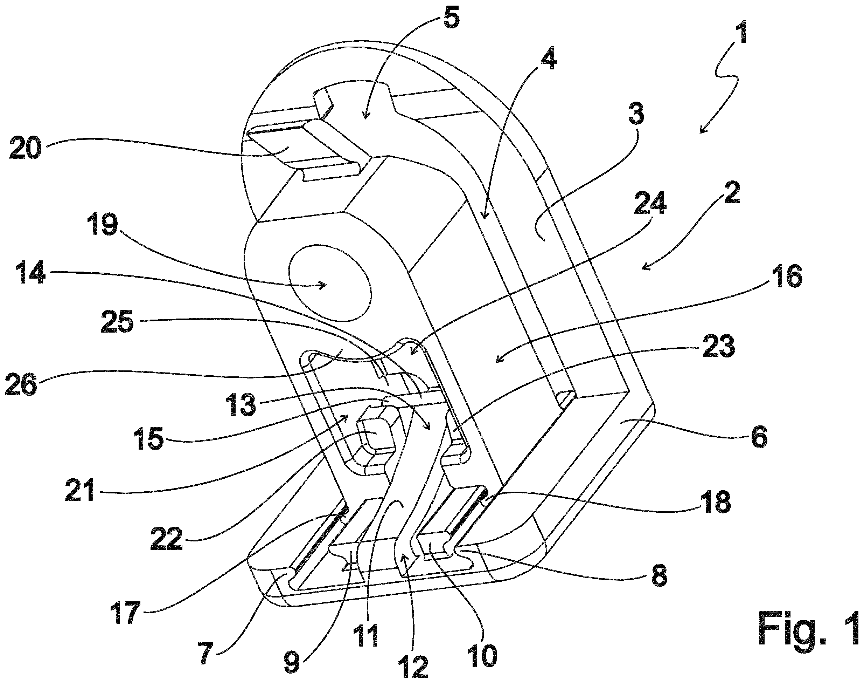

Fig. 1 zeigt in einer perspektivischen Ansicht ein zweckmäßigerweise aus einem hartelastischen Kunststoffmaterial hergestelltes Ausführungsbeispiel einer Steckmutter 1. Die Steckmutter 1 verfügt über ein Lagerteil 2, das eine längliche Deckplatte 3 aufweist. Die Deckplatte 3 ist mit einer Deckplattenausnehmung 4 ausgebildet, die an einem freien Ende der Deckplatte 3 abschnittsweise mit einer Deckplattenfreimachung 5 in Längsrichtung nach außen erweitert ist.

Auf der der Deckplattenfreimachung 5 gegenüberliegenden Seite ist die Deckplatte 3 mit einer Randplatte 6 verbunden, die bei diesem Ausführungsbeispiel rechtwinklig zu der Deckplatte 3 ausgerichtet ist und sich von der Deckplatte 3 einseitig weg erstreckt, so dass sich für das Lagerteil 2 eine L-artige Gestalt ergibt. Die Randplatte 6 weist auf ihrer der Deckplatte 3 zugewandten Seite eine Führungsanordnung auf, die bei diesem Ausführungsbeispiel durch eine erste Randschiene 7, eine zweite Randschiene 8, die außenseitig angeordnet sind, sowie durch eine erste Innenschiene 9 und eine zweite Innenschiene 10 gebildet ist, die innenseitig der Randschienen 7, 8 angeordnet sind. Die Innenschienen 9, 10 weisen einen Abstand voneinander auf. Die Randschienen 7, 8 und die Innenschienen 9, 10 sind parallel zueinander ausgerichtet und erstrecken sich in einer Längsrichtung der Randplatte 6 von dem der Deckplatte 3 zugewandten Ende bis zu dem der Deckplatte 3 abgewandten Ende der Randplatte 6.

Weiterhin verfügt das Ausführungsbeispiel gemäß Fig. 1 über einen Federarm 11 einer Federanordnung, der mit einem Anbindungsende 12 an der der Deckplatte 3 abgewandten Seite der Randplatte 6 zwischen den Innenschienen 9, 10 mit der Randplatte 6 verbunden ist. Der Federarm 11 ist in der in Fig. 1 dargestellten relaxierten Gestalt zweckmäßigerweise von dem Anbindungsende 12 in Richtung eines dem Anbindungsende 12 gegenüberliegenden, der Deckplatte 3 zugewandten Betätigungsendes 13 von der Randplatte 6 weg weisend gekrümmt ausgebildet. An dem Betätigungsende 13 verfügt der Federarm 11 über einen Quersteg 14, der quer zur Längsrichtung ausgebildet ist und zwei seitlich abstehende Lagerenden 15 aufweist.

Weiterhin verfügt die Steckmutter 1 gemäß dem Ausführungsbeispiel gemäß Fig. 1 über ein Verschiebeteil 16 von einer im Wesentlichen quaderförmigen Gestalt, das an einer Randseite mit einem ersten Gleitsteg 17 und mit einem zweiten Gleitsteg 18 ausgebildet ist. Der erste Gleitsteg 17 ist zwischen der ersten Randschiene 7 und der ersten Innenschiene 9 angeordnet, während der zweite Gleitsteg 18 zwischen der zweiten Randschiene 8 und der zweiten Innenschiene 10 der Randplatte 6 liegt. Dadurch ist das Verschiebeteil 16 in Längsrichtung in Bezug auf das Lagerteil 2 verschiebbar, wobei durch einen hintergreifenden formschlüssigen Eingriff der Gleitstege 17, 18 mit den Randschienen 7, 8 und den Innenschienen 9, 10 das Verschiebeteil 16 quer zur Längsrichtung unlösbar mit dem Lagerteil 2 verbunden ist.

Auf der den Gleitstegen 17, 18 abgewandten Seite ist das Verschiebeteil 16 mit einem sich in Längsrichtung erstreckenden Schraubenaufnahmekanal 19 ausgebildet, der sich durch die kürzere Seite des Verschiebeteiles 16 hindurch erstreckt. Weiterhin lässt sich der Darstellung gemäß Fig. 1 entnehmen, dass auf der den Gleitstegen 17, 18 abgewandten Seite des Verschiebeteiles 16 eine von der Deckplatte 3 schräg weg weisende Montagezunge 20 ausgebildet ist, um, wie weiter unten detaillierter ersichtlich, die Montage der Steckmutter 1 zu erleichtern.

Zwischen den Gleitstegen 17, 18 und dem Schraubenaufnahmekanal 19 ist das Verschiebeteil 16 mit einem Federarmaufnahmeraum 21 ausgebildet, in den in der zusammengebauten Anordnung der Steckmutter 1 gemäß Fig. 1 der Federarm 11 abschnittsweise und mit seinem Betätigungsende 13 eintaucht. In dem Federarmaufnahmeraum 21 sind ein erster Federarmhaltesockel 22 und ein zweiter Federarmhaltesockel 23 angeordnet, denen bei der in Fig. 1 dargestellten Variante gegenüberliegend auf der der Deckplatte 3 zugewandten Seite seitlich in eine Einführausnehmung 24, die auf der der Deckplatte 3 zugewandten Seite des Verschiebeteiles 16 ausgebildet ist, ein erster Gegensockel 25 und ein zweiter Gegensockel 26 seitlich einkragend ausgebildet sind. Das Betätigungsende 13 ist zwischen den Federarmhaltesockeln 22, 23 angeordnet, wobei die Lagerenden 15 des Quersteges 14 zwischen jeweils einem Federarmhaltesockel 22, 23 und einem Gegensockel 25 angeordnet sind.

Zum Erleichtern des Zusammenbaus der Steckmutter 1 sind die Gegensockel 25 an ihren den Federarmhaltesockeln 22, 23 abgewandten Außenseiten gekrümmt ausgebildet, so dass bei Einführen der Gleitstege 17, 18 zwischen die Randschienen 7, 8 und Innenschienen 9, 10 beginnend von der der Deckplatte 3 abgewandten Seite die Lagerenden 15 an den gekrümmten Außenseiten der Gegensockel 25 unter Verbiegen des Federarmes 11 aufgleiten und nach Eintritt in den Federarmaufnahmeraum 21 aufgrund der Vorspannung des Federarmes 11 direkt zwischen die Federarmhaltesockel 22, 23 und die Gegensockel 25 einschnappen. Auf der den Federarmhaltesockeln 22, 23 und den Gegensockeln 25 gegenüberliegenden Seite des Federarmaufnahmeraumes 21 ist eine Anschlagstruktur 26 ausgebildet, die in axialer Richtung gegenüber den Federarmhaltesockeln 22, 23 zu dem Anbindungsende 12 des Federarms 11 hin versetzt ist.

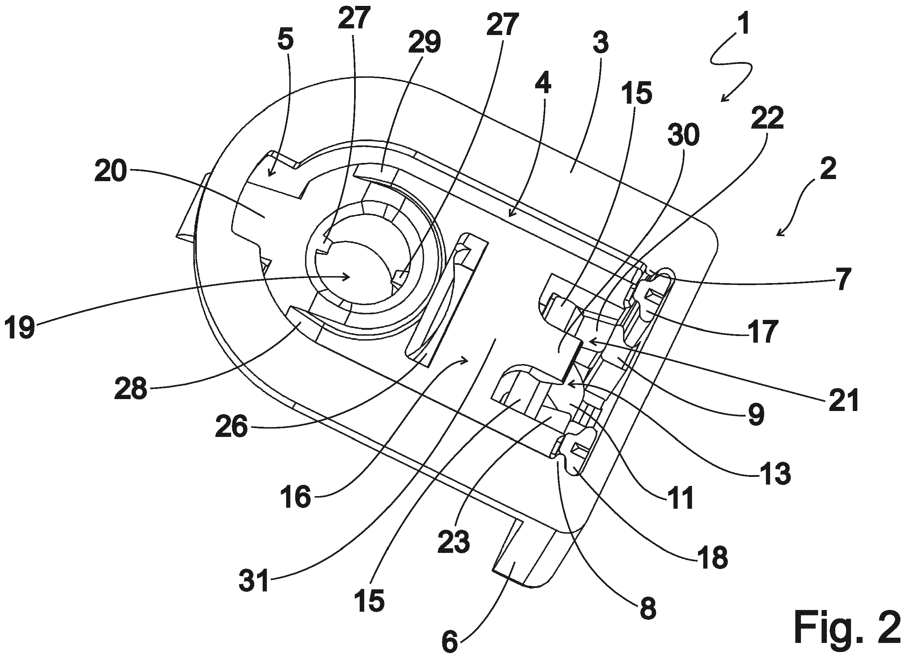

Fig. 2 zeigt in einer perspektivischen Darstellung das Ausführungsbeispiel einer erfindungsgemäßen Steckmutter 1 gemäß Fig. 1 mit Blick auf die dem Verschiebeteil 16 abgewandte Seite der Deckplatte 3 des Lagerteiles 2. Aus Fig. 2 ist deutlich der in seitlicher Richtung beidseitige Hintergriff der Gleitstege 17, 18 durch die Randschienen 7, 8 und Innenschienen 9, 10 ersichtlich. Des Weiteren lässt sich der Darstellung gemäß Fig. 2 entnehmen, dass an dem der Deckplatte 3 zugewandten Ende des Schraubenaufnahmekanals 19 radial nach innen vorstehende Eingriffsvorsprünge 27 ausgebildet sind, um den Eingriff mit einer in Fig. 2 nicht dargestellten Befestigungsschraube zu fördern. Weiterhin ist aus Fig. 2 ersichtlich, dass beidseitig des Schraubenaufnahmekanals 19 gekrümmte Montageschrägen 28, 29 ausgebildet sind, die von ihrer der Montagezunge 20 zugewandten Seite in Richtung der den Gleitstegen 17, 18 zugewandten Seite zu der Deckplatte 3 des Lagerteiles 2 hin ansteigen und somit wie die Montagezunge 20 zum Erleichtern der Montage der Steckmutter 1 dienen.

Weiterhin lässt sich der Darstellung gemäß Fig. 2 entnehmen, dass abweichend von dem Ausführungsbeispiel gemäß Fig. 1 in einer weiteren Variante zwischen den Gleitstegen 17, 18 auf der den Federarmhaltesockeln 22, 23 gegenüberliegend auf der der Deckplatte 3 zugewandten Seite eine Gegenzunge 30 ausgebildet ist, die an einer den Federarmaufnahmeraum 21 in Richtung der Deckplatte 3 bereichsweise abschließenden Deckplatte 31 angeformt, mittig zwischen den Lagerenden 15 angeordnet ist und entsprechend den Gegensockeln 25 der in Fig. 1 erläuterten Variante das Betätigungsende 13 des Federarmes 11 frei beweglich lagert.

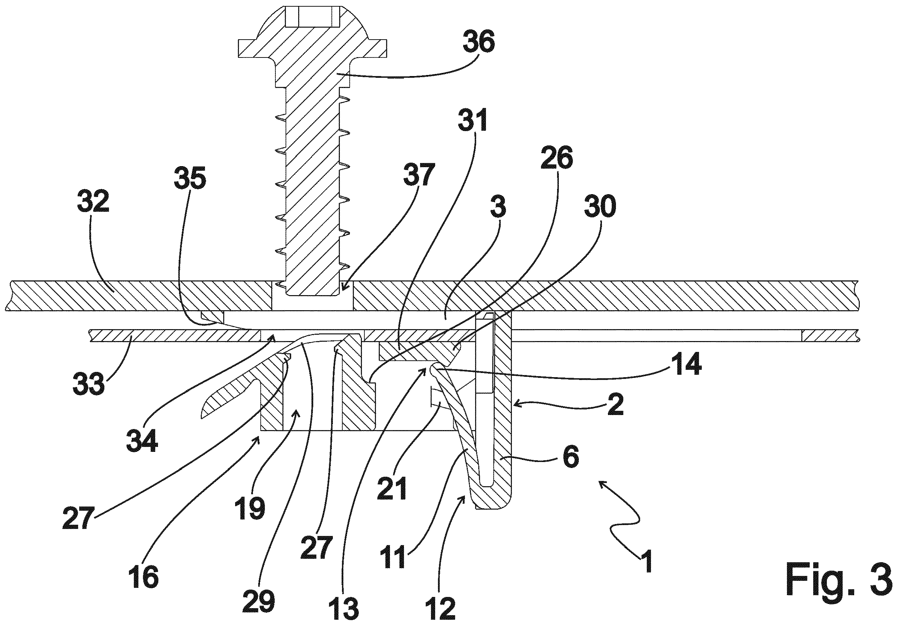

Fig. 3 zeigt in einer Schnittansicht das Ausführungsbeispiel einer erfindungsgemäßen Steckmutter gemäß Fig. 1 und Fig. 2, hier in der Variante gemäß Fig. 2, in einer Montageanordnung zum Befestigen eines Anbauteiles 32 an einem verhältnismäßig dünnen Trägerteil 33. Die Steckmutter 1 liegt mit der Deckplatte 3 des Lagerteiles 2 auf einer dem Anbauteil 32 zugewandten Seite des Trägerteiles 33 auf, wobei die Randplatte 6 an einer Trägerteilausnehmung 34 gegenüberliegenden Randseite anliegt.

Zum Einnehmen der Anordnung gemäß Fig. 3 wird die Steckmutter 1 auf das Trägerteil 33 aufgeschoben, wobei dieser Vorgang durch die schräge Montagezunge 20, die Montageschrägen 28, 29 und eine auf der der Randplatte 6 abgewandten Seite der Deckplatte 3 ausgebildete Einführschräge 35 erleichtert wird. Nach Auflegen des Anbauteiles 32 auf die dem Trägerteil 33 abgewandte Seite der Deckplatte 3 erfolgt das Einschrauben einer Befestigungsschraube 36 unter Durchtritt einer in dem Anbauteil 32 ausgebildeten Anbauteilausnehmung 37 und Eintritt der Befestigungsschraube 36 in den Schraubenaufnahmekanal 19, um den Hintergriff mit den Eingriffsvorsprüngen 27 zu erzielen.

Aufgrund der verhältnismäßig geringen Dicke des in Fig. 3 dargestellten Trägerteiles 33 ist der Federarm 11 in gänzlich oder nahezu relaxierter Anordnung, in der er verhältnismäßig nahe an der Randplatte 6 angeordnet ist.

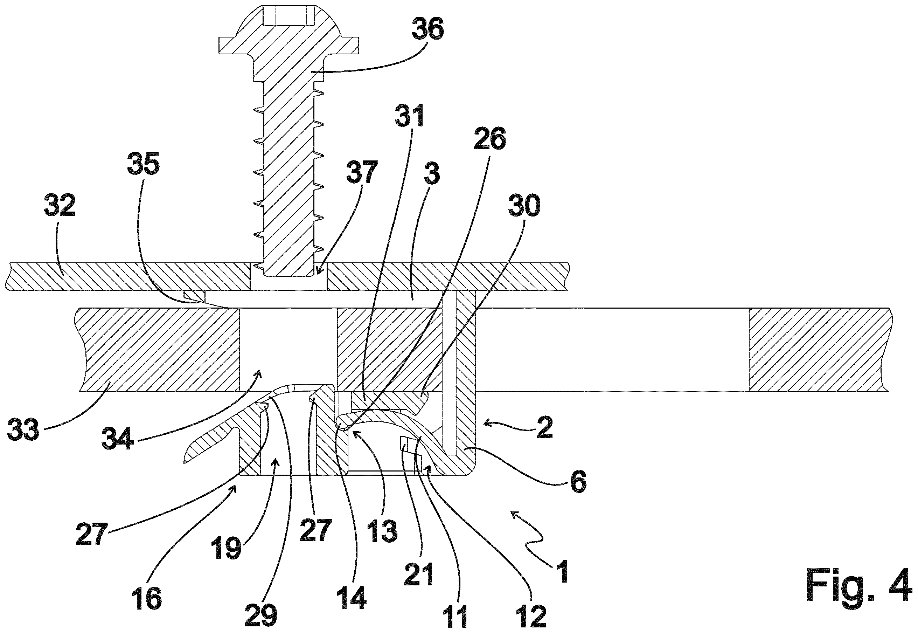

Fig. 4 zeigt in einer Schnittansicht die grundsätzliche Anordnung gemäß Fig. 3 mit einer gegenüber dem in Fig. 3 dargestellten Trägerteil 33 erheblich größeren Dicke. Aus Fig. 4 ist ersichtlich, dass der Federarm 11 nunmehr von der Randplatte 6 des Lagerteiles 2 weg gebogen ist und, wie in der Anordnung gemäß Fig. 4 vorliegend, bei einer maximal zulässigen Dicke des Trägerteiles 33 mit dem Quersteg 14 an der an dem Verschiebeteil 16 ausgebildeten als Endanschlag wirkenden Anschlagstruktur 26 anschlägt, um eine Überlastung mit einer plastischen Verformung oder gar mit einem Bruch des Federarmes 11 zu vermeiden.

Aus Fig. 4 ist weiterhin ersichtlich, dass aufgrund der freien Beweglichkeit des Betätigungsendes 13 des Federarmes 11 mit Gleiten des Quersteges 14 an der Deckplatte 31 des Verschiebeteiles 16 auch bei verhältnismäßig dicken Trägerteilen 33 aufgrund der verhältnismäßig geringen Verformung des Federarmes 11 dieser auch verhältnismäßig dick ausgebildet ist, was die Stabilität der Steckmutter 1 fördert.

## Patentansprüche

1. Steckmutter zum Befestigen eines Anbauteiles (32) an einem Trägerteil (33) mit einem Lagerteil (2), das eine Deckplatte (3) und eine Randplatte (6) aufweist, die zueinander abgewinkelt ausgerichtet sind, mit einem Verschiebeteil (16), das in einer Längsrichtung zu dem Lagerteil (2) über eine Führungsanordnung (7, 8, 9, 10, 17, 18) verschiebbar mit diesem verbunden ist, und mit einer Federanordnung, mit der das Verschiebeteil (16) in Richtung der Deckplatte (3) vorspannbar ist, wobei die Federanordnung mindestens einen Federarm (11) aufweist, der mit einem Anbindungsende (12) an einer von der Deckplatte (3) abgewandten Seite der Randplatte (6) angebracht ist, wobei der mindestens eine Federarm (11) mit einem dem Anbindungsende (12) gegenüberliegenden freien Betätigungsende (13) gegenüber dem Verschiebeteil (16) frei beweglich gelagert an dem Verschiebeteil (16) anliegt, **dadurch gekennzeichnet, dass** an dem Betätigungsende (13) des mindestens einen Federarms (11) ein Quersteg (14) quer zur Längsrichtung ausgebildet ist, und an dem Verschiebeteil (16) eine Anschlagstruktur (26) ausgebildet ist, die als Endanschlag für den Quersteg (14) bei einer maximal zulässigen Dicke des Trägerteils (33) wirkt.

2. Steckmutter nach Anspruch 1, **dadurch gekennzeichnet, dass** der mindestens eine oder jeder Federarm (11) abschnittsweise in einem in dem Verschiebeteil (16) ausgebildeten Federarmaufnahmeraum (21) angeordnet ist.

3. Steckmutter nach Anspruch 2, **dadurch gekennzeichnet, dass** die Führungsanordnung wenigstens ein Paar von Schienen (7, 8, 9, 10) und jeweils einen in ein zugeordnetes Paar von Schienen (7, 8, 9, 10) eingreifenden Gleitsteg (17, 18) aufweist.

4. Steckmutter nach Anspruch 3, **dadurch gekennzeichnet, dass** zwei Paare von Schienen (7, 8, 9, 10) vorhanden sind, zwischen denen je ein Federarm (11) angeordnet ist.

5. Steckmutter nach Anspruch 4, **dadurch gekennzeichnet, dass** die Paare von Schienen (7, 8, 9, 10) und die Gleitstege (17, 18) quer zur Längsrichtung unlösbar miteinander verbunden sind.

6. Steckmutter nach einem der Ansprüche 1 bis 5, **dadurch gekennzeichnet, dass** der mindestens eine oder jeder Federarm (11) in einer relaxierten Anordnung von der Randplatte (6) weg weisend gekrümmt ist.

## Claims

1. Plug-in nut to secure an add-on part (32) to a support part (33) with a bearing part (2), which has a cover plate (3) and an edge plate (6), designed to be at an angle to one another, with a moving part (16), which is connected in a sliding manner in a longitudinal direction to the bearing part (2) by a guiding arrangement (7, 8, 9, 10, 17, 18), and to move with said moving part, and with a spring arrangement with which the moving part (16) can be pretensioned towards the cover plate (3), wherein the spring arrangement has at least one spring arm (11) which is attached by a connecting end (12) to a side of the edge plate (6) away from the cover plate (3), wherein the at least one spring arm (11) rests against the moving part (16), mounted to be freely movable against the moving part (16), with a free actuating end (13) opposite the connecting end (12), **characterised in that**, on the actuating end (13) of the at least one spring arm (11), a transverse web (14) is formed obliquely to the longitudinal direction, and, on the moving part (16), a stop structure (26) is formed which acts as an end stop for the transverse web (14) when the allowable thickness of the support part (33) is at its maximum.

2. Plug-in nut according to claim 1, **characterised in that** the at least one or each spring arm (11) is arranged partially in a spring arm receiving space (21) formed in the moving part (16).

3. Plug-in nut according to claim 2, **characterised in that** the guide arrangement has at least one pair of rails (7, 8, 9, 10) and, for each pair, a sliding platform (17, 18) engaging in an associated pair of rails (7, 8, 9, 10).

4. Plug-in nut according to claim 3, **characterised in that** two pairs of rails (7, 8, 9, 10) are present between each of which a spring arm (11) is arranged.

5. Plug-in nut according to claim 4, **characterised in that** the pairs of rails (7, 8, 9, 10) and the sliding platforms (17, 18) are inextricably connected together transversely to the longitudinal direction.

6. Plug-in nut according to any one of claims 1 to 5, **characterised in that** the at least one or each spring arm (11) is bent in a relaxed arrangement pointing away from the edge plate (6).

## Revendications

1. Écrou mâle pour la fixation d'une pièce rapportée (32) à une pièce de support (33) avec un palier (2) qui présente une plaque de recouvrement (3) et une plaque de rebord (6) qui sont orientées pliées mutuellement, avec une pièce coulissante (16) qui est déplaçable dans une direction longitudinale par une structure de guidage (7, 8, 9, 10, 17, 18) par rapport au palier (2) et reliée à celui-ci, et avec un dispositif à ressort, avec lequel la pièce coulissante (16) peut être précontrainte dans la direction de la plaque de recouvrement (3), le dispositif à ressort présentant au moins un bras de ressort (11) qui est disposé avec une extrémité de raccordement (12) sur un côté de la plaque de rebord (6) opposé à la plaque de recouvrement (3), l'au moins un bras de ressort (11) avec une extrémité d'actionnement (13) libre opposée à l'extrémité de raccordement (12) en face de la pièce coulissante (16) étant logé de manière mobile sur la pièce coulissante (16), **caractérisé en ce qu'**une barrette transversale (14) est formée transversalement à la direction longitudinale sur l'extrémité d'actionnement (13) de l'au moins un bras de ressort (11), et **en ce qu'**une structure d'arrêt (26), qui agit comme une butée pour la barrette transversale (14) avec une épaisseur maximum admissible de la pièce de support (33), est formée sur la pièce coulissante (16).

2. Écrou mâle selon la revendication 1, **caractérisé en ce que** l'au moins un ou chaque bras de ressort (11) est disposé par section dans un espace de logement de bras de ressort (21) dans la pièce coulissante (16).

3. Écrou mâle selon la revendication 2, **caractérisé en ce que** la structure de guidage présente au moins une paire de rails (7, 8, 9, 10) et une rainure de glissement (17, 18) engrenant respectivement dans une paire de rails (7, 8, 9, 10) affectée.

4. Écrou mâle selon la revendication 3, **caractérisé en ce que** deux paires de rails (7, 8, 9 ,10) sont présentes, entre chacune d'elles est disposé un bras de ressort (11).

5. Écrou mâle selon la revendication 4, **caractérisé en ce que** les paires de rails (7, 8, 9 ,10) et les rainures de glissement (17, 18) sont reliées entre elles de manière indétachable transversalement à la direction longitudinale.

6. Écrou mâle selon l'une quelconque des revendications 1 à 5, **caractérisé en ce que** l'au moins un ou chaque bras de ressort (11) est courbé en s'éloignant de la plaque de rebord (6) dans une disposition relâchée.
